# EUROPEAN PATENT SPECIFICATION

(11) **EP 1 607 128 B1**
(45) Date of publication and mention of the grant of the patent: **01.08.2007**
(21) Application number: 05104498.0
(22) Date of filing: 25.05.2005
(51) Int. Cl.: B01D 29/11, B01D 46/02

(54) **Method and device for manufacturing head gaskets for bag filters**
Verfahren und Vorrichtung zur Herstellung von Kopfdichtungen für Taschenfilter
Procédé et dispositif servant à fabriquer des jointes pour filtre à manches

(30) Priority: 17.06.2004 IT MO20040149
(43) Date of publication of application: 21.12.2005
(73) Proprietor: Manicardi Ecologia S.N.C. di Manicardi Carmen & C., 41040 Spezzano Di Fiorano (MO) (IT)
(72) Inventor: Barbolini, Alessandro, 41040 Spezzano di Fiorano MO (IT)
(74) Representative: Modiano, Micaela Nadia

(56) References cited:
- EP-A- 0 581 735
- GB-A- 2 287 660
- US-A- 3 747 305
- US-A- 3 937 621
- US-A- 4 015 961
- US-A- 5 746 792

## Description

The present invention relates to a method and a device for manufacturing head gaskets for bag filters.

A bag filter, used to separate particulate matter from a gas, is substantially constituted by a tube made of fabric, which hangs from a supporting plate or is stretched between two opposite supporting plates and whose opposite ends are affixed to openings provided in said plates.

In order to fix the ends of the tubular element to the openings of the plates, gaskets are known which are substantially constituted by a supporting ring made of elastically deformable material, such as for example spring steel, and on the outer lateral surface of which a tape made of fabric is applied.

The tape is shaped, in transverse cross-section, substantially like a channel, with a central groove that is substantially as wide as the plate is thick and is delimited, along its opposite sides, by two protruding edges; once applied to the supporting ring, the tape has, at the groove, a diameter that is substantially equal to the diameter of the opening in which the corresponding end of the tubular element is to be fixed and has, at the edges, a diameter that is substantially larger than the diameter of said opening.

The gaskets are rigidly coupled to the ends of the tubular element; by way of the deformability of the supporting ring, they allow to insert the ends in the openings of the plates and to keep them in close contact therewith, the thickness of the plate being contained within the central groove of the tape, the lateral edges of which form a seal on the opposite faces of said plate.

In known gaskets, the tape is applied to the supporting ring by using a double-adhesive tape.

The gaskets can be assembled by hand by applying one side of the double-adhesive tape around the supporting ring and, after removing the protective film from its opposite side, by winding the tape thereon.

As an alternative, the gaskets can be assembled automatically by machines; in this case, the tape is generally manufactured so that one side of the adhesive tape is applied to its face designed to adhere to the outer lateral surface of the supporting ring, the opposite side of said tape being protected by a film.

Known machines for manufacturing such gaskets are substantially constituted by a frame that supports tape feeding means, means for conveying the tape along a sliding channel, said tape being arranged so that the side protected by the film is directed outward, means for removing the protective film, such as for example a roller for rewinding said film, means for cutting a segment of the tape that is substantially equal to the external circumference of the supporting ring, and means for applying the cut segment to the outer lateral surface of the supporting ring.

These last means can be constituted for example by two contrarotating rollers, which are arranged at the output of the tape sliding channel and between which the supporting ring is clamped and rotationally actuated; the tape that exits from the sliding channel is wound and compressed against the outer lateral surface of the supporting ring to which it adheres.

These known types of gasket are not free from drawbacks, including the fact that they use double-adhesive tapes, whose very high costs affect significantly their production costs.

Moreover, the use of double-adhesive tapes causes drawbacks, which are observed in the operation of known machines for manufacturing gaskets, including the fact that they soil the tape cutting means, forcing frequent stops of said machine for cleaning, and this accordingly slows and decreases production.

The aim of the present invention is to eliminate the above-mentioned drawbacks, by providing a method and a device for manufacturing head gaskets for bag filters, which allow to produce gaskets simply and quickly, to contain their production costs, and to ensure substantially continuous operation of the machines for producing them, minimizing stops for cleaning interventions, particularly for cleaning the cutting means.

Within this aim, an object of the present invention is to provide a structure that is simple, relatively easy to provide in practice, safe in use, effective in operation, and has a relatively low cost.

This aim and this object are achieved by the present method for manufacturing head gaskets for bag filters, of the type that comprises a supporting ring, on the outer lateral surface of which a tape is applied, characterized in that it comprises the steps of applying, on either the outer lateral surface of said ring and/or the side of said tape that is intended to be applied thereon, at least one layer of a fluid adhesive, and making said side of the tape adhere to said outer lateral surface of the supporting ring.

This aim and this object are also achieved by the present device for manufacturing head gaskets for bag filters, of the type that comprises a supporting ring on the outer lateral surface of which a tape is applied, characterized in that it comprises: means for dispensing a fluid adhesive onto the outer lateral surface of said supporting ring and/or the side of said tape that is intended to be applied thereto; means for sliding or turning, with respect to each other or vice versa respectively said tape and said dispensing means, arranged above said side thereof and/or said supporting ring and said dispensing means arranged proximate to its outer lateral surface; and a control and actuation unit, which is suitable to activate said dispensing means for a time substantially and respectively equal to the sliding time of the entire length of said tape or to the time of a full rotation of or around said supporting ring.

Further characteristics and advantages of the present invention will become better apparent from the following detailed description of a preferred but not exclusive embodiment of a method and a device for manufacturing head gaskets for bag filters, illustrated by way of nonlimiting example in the accompanying drawing, wherein:

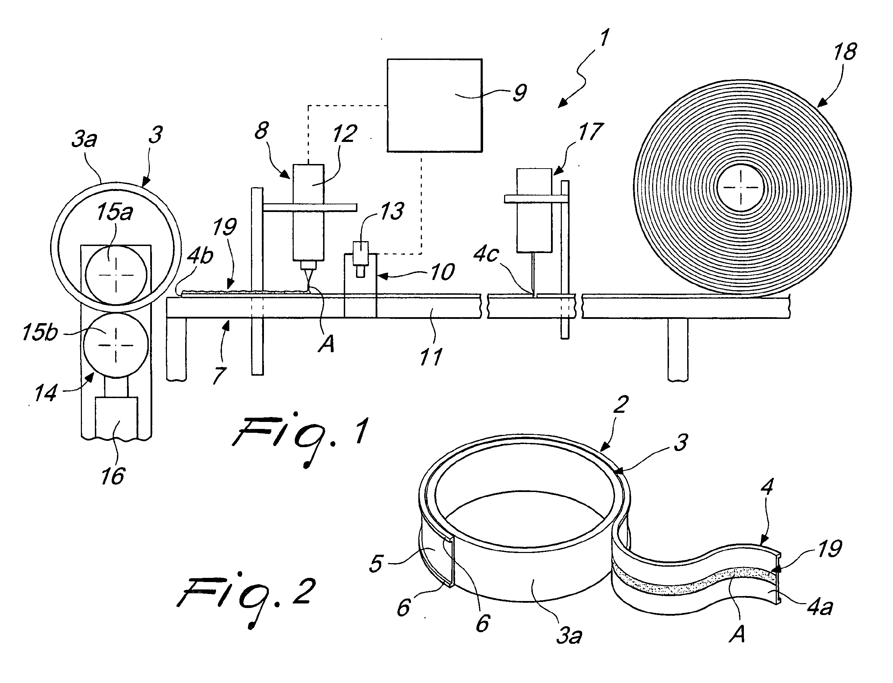

Figure 1 is a schematic front view of a device according to the invention;
Figure 2 is a schematic partially cutout view of a gasket that can be obtained with the method according to the invention.

With reference to the figures, the reference numeral 1 generally designates a device for manufacturing head gaskets 2 for bag filters.

The gasket 2 is designed to be anchored to one end of the tubular element that constitutes the filter; such end, in turn, is designed to be fixed to an opening provided in a supporting plate.

The gasket 2 is constituted by a supporting ring 3, on the outer lateral surface 3a of which a tape 4 is applied; the ring 3 is made of elastically deformable material, such as for example spring steel, and the tape 4 is made of fabric, such as for example felt.

The tape 4 has a transverse cross-section that is substantially channel-shaped, with a central groove 5 that is substantially as wide as the supporting plate is thick and is delimited along the two opposite sides by two ridges 6.

The device 1 comprises means 7 for sliding the tape 4, which is arranged so that its side 4a is directed outward; means 8 for dispensing an adhesive A in the fluid state, which are arranged above the side 4a; and a control and actuation unit 9, which is suitable to activate the dispensing means 8 for a time that is substantially equal to the sliding time of the tape 4 below said dispensing means.

Further, the device 1 comprises means 10 for detecting the relative position of the tape 4 with respect to the dispensing means 8.

In the illustrated embodiment, the advancement means 7 comprise a sliding channel 11, inside which known types of mechanism that are not shown in detail cause the advancement of the tape 4, so that its side 4a is directed upward, while the dispensing means 8 comprise a gun 12 for spraying a fluid adhesive A, such as a hot-melt glue.

The sensing means 10 are instead constituted by a photocell 13, which sends to the unit 9 a signal indicating the presence of the tape 4, on the side 4a of which the adhesive A is to be dispensed.

At the output of the channel 11 there are means 14 for turning the ring 3, which comprise for example two rollers 15, a motorized one 15a and a free roller 15b, which is supported by a linear actuator 16, between which the ring 3 is clamped.

Upstream of the dispensing means 8 there is a cutting assembly 17 of a conventionally known type, which is suitable to cut the tape 4, unwound from a supply reel 18, with a length that is substantially equal to the external circumference of the ring 3.

However, alternative embodiments of the device 1, not shown for the sake of simplicity in illustration, are also possible in which, for example, the dispensing means 8 are arranged proximate to the outer lateral surface 3a of the ring 3, so as to dispense the adhesive A thereon or also thereon, and in this case the unit 9 would activate the dispensing means 8 for a time that is substantially equal to a full rotation of the ring 3 while the sensing means 10 would indicate the relative position of the tape 4 with respect to the ring 3, or in which the dispensing means 8 are moved with respect to the tape 4 or the ring 3.

The sensing means 10 also might be provided differently; for example, they might comprise an encoder.

The operation of the invention is as follows.

The photocell 13 reports to the unit 9 the presence of the tape 4, which is made to slide along the channel 11.

The unit 9, with a presettable delay time required to allow the head end 4b of the tape 4 to arrive at the gun 12, activates said gun so that it dispenses the adhesive A, which by virtue of the relative motion of the tape 4 with respect to the gun 12 is spread in a generally threadlike layer 19 on its side 4a; when the trailing end 4c of the tape 4 arrives at the gun 12, it is deactivated.

At the output of the channel 11, the tape 4 is wrapped around the ring 3, turned by the rollers 15, and the roller 15b presses them against each other.

The gasket 2 that can thus be obtained has a generally threadlike layer 19 of adhesive A that is interposed between the outer lateral surface 3a of the ring 3 and the side 4a of the tape 4.

In general, therefore, the method for manufacturing head gaskets for bag filters according to the invention comprises applying, on the outer lateral surface 3a of the ring 3 and/or the face 4a of the tape 4 that is intended to be applied thereto, at least one layer 19 of a fluid adhesive A, and making the side 4a of the tape 4 adhere to the outer lateral surface 3a of the ring 3.

In practice it has been found that the described invention achieves the intended aim and obj ect.

The method and the device according to the invention in fact use a fluid adhesive, eliminating the use of much more expensive double-adhesive tapes, thus allowing to contain the overall production costs of the gaskets.

Further, the method and the device according to the invention, by eliminating the use of double-adhesive tapes, facilitate the cutting of the tape and ensure the functionality of the cutting means, keeping them free from residues of adhesive and thus eliminating machine stops for cleaning.

The invention thus conceived is susceptible of numerous modifications and variations, all of which are within the scope of the appended claims.

All the details may further be replaced with other technically equivalent ones.

In practice, the materials used, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for manufacturing head gaskets for bag filters, of the type that comprises a supporting ring (3) on the outer lateral surface (3a) of which a tape (4) is applied, **characterized in that** it comprises: means (8) for dispensing a fluid adhesive (A) on the outer lateral surface (3a) of said supporting ring (3) and/or on the side (4a) of said tape (4) that is intended to be applied thereon; means (7) for sliding or turning, with respect to each other or vice versa, respectively said tape (4) and said dispensing means (8) that are arranged above said side (4a) thereof and/or said supporting ring (3) with said dispensing means (8) being arranged proximate to the outer lateral surface (3a) thereof; and a control and actuation unit (9), which is suitable to activate said dispensing means (8) for a time substantially and respectively equal to the sliding time of the entire length of said tape (4) below said dispensing means (8) or to the duration of a full rotation of the supporting ring (3) or of the tape (4) around said supporting ring (3).

2. The device according to claim 1, **characterized in that** it comprises sensing means (10) for detecting the relative position of said tape (4) with respect to said dispensing means (8) and/or of said tape (4) with respect to said supporting ring (3), which are associated with said control and actuation unit (9) .

3. The device according to claim 2, **characterized in that** said sensing means (10) comprise at least one photocell (13).

4. The device according to claim 2, **characterized in that** said sensing means (10) comprise at least one encoder.

5. A method for manufacturing head gaskets for bag filters, of the type that comprises a supporting ring (3) on the outer lateral surface (3a) of which a tape (4) is applied, **characterized in that** it comprises the steps of: applying at least one layer (19) of a fluid adhesive (A) having a threadlike form onto the outer lateral surface (3a) of said ring (3) and/or the side (4a) of said tape (4) that is intended to be applied to the ring (3), and making said side (4a) of the tape (4) adhere to said outer lateral surface (3a) of the supporting ring (3).

6. The method according to claim 5, **characterized in that** it further comprises the steps of: moving, with a sliding or rotary relative motion, with respect to each other or vice versa, respectively said tape (4) and said means (8) for dispensing said fluid adhesive (A), which are arranged above said side (4a) the tape (4) and/or said supporting ring (3) with the means (8) for dispensing said adhesive (A) being located proximate to said outer lateral surface (3a) thereof; activating said dispensing means (8) for a time that is substantially and respectively equal to the sliding time of the entire length of said tape (4) or to the duration of a full rotation of said supporting ring (3), or of the tape (4) around said supporting ring (3); and winding and compressing said tape (4) around said supporting ring (3), the length of said tape (4) being provided substantially equal to the outer circumference of said supporting ring (3), said side (4a) thereof being adhered to said outer lateral surface (3a) of the supporting ring (3).

7. The method according to claim 5 , **characterized in that** it comprises the steps of: conveying said tape (4) along a sliding channel (11)so that said side (4a) is directed outward; turning said supporting ring (3) proximate to the output of said channel (11); activating the means (8) for dispensing said fluid adhesive (A), which are arranged above said channel (11) and/or proximate to the outer lateral surface (3a) of said supporting ring (3) for a time that is substantially and respectively equal to the transit time of said tape (4) below said dispensing means (8) or to the time of a full rotation of said supporting ring (3); and winding and compressing said tape (4) around said supporting ring (3) with said side (4a) being in contact with said outer lateral surface (3a) of the supporting ring (3), said tape (4) having a length that is substantially equal to the external circumference of said supporting ring (3).

8. The method according to one or more of the claims 5-7, **characterized in that** it comprises the step of detecting the relative position of said tape (4) with respect to said dispensing means (8) and/or the relative position of said tape (4) with respect to said supporting ring (3).

9. A head gasket for bag filters made with the device of claims 1-4 and according to the method set forth in claims 5-8, of the type that comprises a supporting ring (3) on the outer lateral surface (3a) of which a tape (4) is applied, **characterized in that** it comprises at least one threadlike layer (19) of a hot- melt adhesive (A) applied in fluid form interposed between the outer lateral surface (3a) of said ring (3) and the side (4a) of said tape (4) that is applied thereto.

## Patentansprüche

1. Gerät zur Herstellung von Kopfdichtungen für Taschenfilter, welches einen Stützring (3) aufweist, an dessen äußerer Mantelfläche (3a) ein Band (4) angebracht wird, **dadurch gekennzeichnet, dass** es aufweist: Mittel (8) zum Auftragen eines flüssigen Klebstoffs (A) auf die äu-ßere Mantelfläche (3a) des Stützringes (3) und / oder auf diejenige Seite (4a) des Bandes (4), welche auf ihm angebracht werden soll; Mittel (7) zum Verschieben oder Drehen der Abgabe-Mittel (8) und des Bandes (4) in Bezug zueinander oder umgekehrt, welche oberhalb dessen Seite (4a) und / oder des Stützringes (3) angeordnet sind, wobei die Abgabe-Mittel (8) nahe an dessen äußerer Mantelfläche (3a) angeordnet sind; sowie eine Steuer- und Betätigungseinheit (9), welche geeignet ist, um die Abgabe-Mittel (8) während der Zeit zu aktivieren, die im Wesentlichen und jeweils gleich der Verschiebezeit der gesamten Länge des Bandes (4) unter den Abgabe-Mitteln (8) ist, oder gleich der Zeit, die für eine komplette Rotation des Stützringes (3) oder des Bandes (4) um den Stützring (3) benötigt wird.

2. Gerät nach Anspruch 1, das **dadurch gekennzeichnet ist, dass** es Aufnahmemittel (10) zum Detektieren der relativen Position des Bandes (4) im Bezug auf die Abgabe-Mittel (8) und / oder auf den Stützring (3) aufweist, welche der Steuer- und Betätigungseinheit (9) zugeordnet ist.

3. Gerät nach Anspruch 1, **dadurch gekennzeichnet, dass** die Aufnahmemittel (10) mindestens eine Photozelle (13) aufweisen.

4. Gerät nach Anspruch 2, **dadurch gekennzeichnet, dass** die Aufnahmemittel (10) mindestens einen Geber aufweisen.

5. Verfahren zur Herstellung von Kopfdichtungen für Taschenfilter des Typs, die einen Stützring (3) aufweisen, auf dessen äußere Mantelfläche (3a) eines Stützringes (3) ein Band (4) aufgebracht wird, **dadurch gekennzeichnet, dass** es die folgenden Schritte aufweist:
Auftragen mindestens einer Schicht (19) eines flüssigen Klebstoffes (A) mit einer fadenartigen Form auf die äußere Mantelfläche (3a) des Ringes (3) und / oder die Seite (4a) des Bandes (4), welches am Stütz-Ring (3) angebracht werden soll, und
Herstellen der Haftung zwischen der Seite (4a) des Bandes (4) und der äußeren Mantelfläche (3a) des Stützringes (3).

6. Verfahren nach Anspruch 5, **dadurch gekennzeichnet dass** es weiterhin die folgenden Schritte aufweist:
Bewegung des Bandes (4) und der Mittel (8) zum Auftragen des flüssigen Klebstoffes (A), welche oberhalb der Seite (4a) des Bandes (4) und / oder des Stützringes (3) angeordnet sind, durch Drehen und / oder Verschieben im Bezug zueinander oder umgekehrt, wobei die Mittel (8) zur Abgabe des flüssigen Klebstoffes (A) in der Nähe der äußeren Mantelfläche (3a) angeordnet sind,
Aktivierung der Abgabe-Mittel (8) während eines Zeitintervalls, welches im Wesentlichen und jeweils gleich der Verschiebezeit der gesamten Länge des Bandes (4) oder gleich der für einen kompletten Kreisumlauf des Stützringes (3) oder des Bandes (4) um den Stützring (3) benötigten Zeit ist; und
Aufwickeln und Komprimieren des Bandes (4) um den Stützring (3), wobei die Länge des Bandes (4) im Wesentlichen gleich dem äußeren Umfang des Stützringes (3) vorgegeben wird und zwischen dessen Seite (4a) und der äußeren Mantelfläche (3a) des Stützringes (3) Haftung hergestellt wird.

7. Verfahren nach Anspruch 5, **dadurch gekennzeichnet, dass** es die Schritte aufweist:
Fördern des Bandes (4) entlang eines Gleitkanals (11), so dass die Seite (4a) nach außen gerichtet ist; Drehen des Stützringes (3) in die Nähe des Auslasses des Kanals (11); Aktivierung der Mittel (8) zum Auftragen des flüssigen Klebstoffes (A), welche oberhalb des Kanals (11) und / oder in der Nähe der äußeren Mantelfläche (3a) des Stützringes angeordnet sind, während eines Zeitintervalls, das im Wesentlichen und jeweils gleich der Verschiebezeit des Bandes (4) unter den Abgabe-Mitteln (8) oder gleich der für eine komplette Rotation des Stützringes (3) benötigten Zeit ist; und
Aufwickeln und Komprimieren des Bandes (4) auf den Stützring (3), wobei die Seite (4a) in Kontakt mit der äußeren Mantelfläche (3a) des Stützringes (3) ist, und wobei die Länge des Bandes (4) im Wesentlichen gleich des äußeren Umfangs des Stützringes (3) ist.

8. Verfahren nach einem oder mehreren der Ansprüche 5-7, **dadurch gekennzeichnet,**
**dass** es den Vorgang des Detektierens der relativen Position des Bandes (4) im Bezug auf die Abgabe-Mittel (8) und / oder der relativen Position des Bandes (4) im Bezug auf den Stützring (3) aufweist.

9. Kopfdichtung für Taschenfilter, hergestellt mit einem Gerät nach den Ansprüchen 1 bis 4 und gemäß dem Verfahren nach den Ansprüchen 5 bis 8 des Typs, dass es einen Stützring (3) aufweist, auf dessen äußerer Mantelfläche (3a) ein Band (4) angebracht wird, **dadurch gekennzeichnet, dass** es mindestens eine fadenartige Schicht (19) eines Heißschmelzklebstoffs (A) aufweist, die in flüssiger Form zwischen die äußere Mantelfläche (3a) des Ringes (3) und die Seite (4a) des Bandes (4) gebracht wird, welches auf ihr angebracht wird.

## Revendications

1. Dispositif servant à fabriquer des joints de tête pour filtres à manches, du type qui comprend un anneau de support (3) ayant une surface latérale externe (3a) autour de laquelle est enroulé un ruban (4), **caractérisé en ce qu'**il comprend: des moyens (8) pour délivrer un adhésif fluide (A) sur la surface latérale externe (3a) dudit anneau de support (3) et/ou sur le côté (4a) dudit ruban (4) qui est destiné à être appliqué sur celle-ci ; des moyens (7) pour faire coulisser ou pour faire pivoter, les uns par rapport aux autres ou vice versa, respectivement ledit ruban (4) et lesdits moyens de distribution (8) qui sont positionnés au dessus dudit côté (4a) de celui-ci et/ou ledit anneau de support (3) avec lesdits moyens de distribution (8) positionnés à proximité de la surface latérale externe (3a) de celui-ci ; et une unité de commande et d'actionnement (9), qui est adaptée pour actionner lesdits moyens de distribution (8) pendant un temps substantiellement et respectivement égal au temps de coulissement de la longueur totale dudit ruban (4) au dessous desdits moyens de distribution (8) ou à la durée d'une rotation complète de l'anneau de support (3) ou du ruban (4) autour dudit anneau de support (3).

2. Dispositif selon la revendication 1, **caractérisé en ce qu'**il comprend des moyens de détection (10) pour détecter la position relative dudit ruban (4) par rapport auxdits moyens de distribution (8) et/ou dudit ruban (4) par rapport audit anneau de support (3), qui sont associés à ladite unité de commande et d'actionnement (9).

3. Dispositif selon la revendication 2, **caractérisé en ce que** lesdits moyens de détection (10) comprennent au moins une photo-cellule (13).

4. Dispositif selon la revendication 2, **caractérisé en ce que** lesdits moyens de détection (10) comprennent au moins un encodeur.

5. Procédé pour fabriquer des joints de tête pour filtres à manches, du type qui comprend un anneau de support (3) ayant une surface latérale externe (3a) autour de laquelle est enroulé un ruban (4), **caractérisé en ce qu'**il comprend les étapes de : appliquer au moins une couche (19) d'un adhésif fluide (A) ayant une forme de fil sur la surface latérale externe (3a) dudit anneau (3) et/ou sur le côté (4a) dudit ruban (4) qui est destiné à être appliqué sur l'anneau (3), et faire adhérer ledit côté (4a) du ruban (4) sur ladite surface latérale externe (3a) de l'anneau de support (3).

6. Procédé selon la revendication 5, **caractérisé en ce qu'**il comprend en outre les étapes de : déplacer, par un mouvement relatif de coulissement ou de pivotement, les uns par rapport aux autres ou vice versa, respectivement ledit ruban (4) et lesdits moyens (8) pour distribuer ledit adhésif fluide (A), qui sont positionnés au-dessus dudit côté (4a) du ruban (4) et/ou ledit anneau de support (3) avec les moyens (8) pour distribuer ledit adhésif (A) qui sont localisés à proximité de ladite surface latérale externe (3a) de celui-ci ; actionner lesdits moyens de distribution (8) pendant un temps qui est substantiellement et respectivement égal à la durée de coulissement de la longueur totale dudit ruban (4) ou à la durée d'une rotation complète dudit anneau de support (3), ou du ruban (4) autour dudit anneau de support (3) ; et enrouler et comprimer ledit ruban (4) autour dudit anneau de support (3), la longueur dudit ruban (4) étant prévue pour être substantiellement égale à la circonférence externe dudit anneau de support (3), faisant adhérer ledit côté (4a) de celui-ci à ladite surface latérale externe (3a) de l'anneau de support (3).

7. Procédé selon la revendication 5, **caractérisé en ce qu'**il comprend les étapes de : convoyer ledit ruban (4) le long d'un canal de coulissement (11) de sorte que ledit côté (4a) est dirigé vers l'extérieur ; faire pivoter ledit anneau de support (3) à proximité de la sortie dudit canal (11) ; actionner les moyens (8) pour distribuer ledit adhésif fluide (A), qui sont positionnés au-dessus dudit canal (11) et/ou à proximité de la surface latérale externe (3a) dudit anneau de support (3) pendant une durée qui est substantiellement et respectivement égale à la durée de transit dudit ruban (4) au-dessous desdits moyens de distribution (8) ou à la durée d'une rotation complète dudit anneau de support (3) ; et enrouler et comprimer ledit ruban (4) autour dudit anneau de support (3) avec ledit côté (4a) étant en contact avec ladite surface latérale externe (3a) de l'anneau de support (3), ledit ruban (4) ayant une longueur qui est substantiellement égale à la circonférence externe dudit anneau de support (3).

8. Procédé selon l'une au moins des revendications 5 à 7, **caractérisé en ce qu'**il comprend l'étape de détecter la position relative dudit ruban (4) par rapport auxdits moyens de distribution (8) et/ou la position relative dudit ruban (4) par rapport audit anneau de support (3).

9. Un joint de tête pour filtres à manches fabriqué avec le dispositif des revendications 1 à 4 et selon le procédé des revendications 5 à 8, du type qui comprend un anneau de support (3) ayant une surface latérale externe (3a) autour de laquelle est enroulé un ruban (4), **caractérisé en ce qu'**il comprend au moins une couche filiforme (19) d'un adhésif thermoplastique (A) appliqué sous forme fluide et interposé entre la surface latérale externe (3a) dudit anneau (3) et ledit côté (4a) dudit ruban (4) qui est appliqué sur celle-ci.
